(19) Europäisches Patentamt
European Patent Office
Office européen des brevets

(11) **EP 2 737 494 B1**

(12) **FASCICULE DE BREVET EUROPEEN**

(45) Date de publication et mention
de la délivrance du brevet:
**12.08.2015 Bulletin 2015/33**

(21) Numéro de dépôt: **12735157.5**

(22) Date de dépôt: **17.07.2012**

(51) Int Cl.:
**G21F 9/28** *(2006.01)*    **G21F 9/30** *(2006.01)*

(86) Numéro de dépôt international:
**PCT/EP2012/063948**

(87) Numéro de publication internationale:
**WO 2013/014022 (31.01.2013 Gazette 2013/05)**

(54) **PROCEDE DE STABILISATION CHIMIQUE DE COMPOSES A BASE DE CARBURES D'URANIUM ET DISPOSITIF METTANT EN OEUVRE LE PROCEDE**

VERFAHREN ZUR CHEMISCHEN STABILISIERUNG VON URANCARBIDVERBINDUNGEN UND VORRICHTUNG ZUR UMSETZUNG DES VERFAHRENS

METHOD FOR CHEMICALLY STABILIZING URANIUM CARBIDE COMPOUNDS, AND DEVICE IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2011 FR 1156795**

(43) Date de publication de la demande:
**04.06.2014 Bulletin 2014/23**

(73) Titulaire: **Commissariat à l'Énergie Atomique et aux Énergies Alternatives
75015 Paris (FR)**

(72) Inventeurs:
• **MARCHAND, Mickael
F-58000 Nevers (FR)**
• **FIQUET, Olivier
F-13770 Venelles (FR)**
• **BROTHIER, Méryl
F-13090 Aix en Provence (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**EP-A1- 0 297 738**

• **H.P. Nawada et al: "T H E R M O G R A V I M E T R I C S T U D Y O F T H E O X I D A T I O N B E H A V I O U R O F U R A N I U M D I C A R B I D E",
Journal of Thermal Analysis, vol. 35, no. 4 1989, pages 1145-1155, XP055021705, Extrait de l'Internet: URL:http://www.akademiai.com/content/p0r57 271mh079t35/ [extrait le 2012-03-13]**

**Description**

Le domaine de l'invention est celui des procédés de traitement de composés à base de carbures d'uranium de formule générique UCx, ces composés pouvant être utilisés comme cible dans tout dispositif mettant en oeuvre des carbures d'uranium dont on doit ultérieurement à leur utilisation, procéder à leur stabilisation et notamment dans les accélérateurs de recherche (ces cibles étant considérées comme des déchets à l'issue de leur utilisation) devant répondre aux critères d'acceptabilité imposés par les autorités de sûretés nucléaires, basées notamment sur leur stabilité chimique dans des conditions normales d'entreposage (à température et pression ambiante).

En effet, les accélérateurs de recherche utilisent des cibles UCx comme sources d'ions lourds en particulier au GANIL (Grand Accélérateur National d'Ions Lourds) à Caen avec l'installation SPIRAL 2 (Système de Production d'Ions Radio-Actifs en Ligne de 2ème Génération.

Le matériau cible UCx, utilisable dans le cadre du fonctionnement des accélérateurs de recherche, est classiquement synthétisé par carbothermie à partir d'un mélange sur-stoechiométrique de graphite et de poudre $UO_2$ puis pressé pour former des pastilles centimétriques. Sa composition structurale est principalement constituée de deux phases : une phase di-carbure d'Uranium $UC_2$ constituant majoritairement le matériau cible (à hauteur de 90% en masse) et une autre phase constituée par du carbone libre noté $C_L$ présent sous forme graphitique. En répartition volumique, ce dernier classiquement présent à hauteur de 70%, peut occuper à terme dans le matériau UCx final des valeurs allant de 0 à plus de 75%. De très faibles traces d'UC peuvent aussi être présentes dans le matériau initial (typiquement inférieures à 1%) synthétisées localement pendant l'étape de carbothermie.

A noter que le matériau réel à stabiliser, une fois irradié, peut renfermer des produits de fission/d'activation tels que le Co, Cs, B, Br, Kr, Zr, Rh, etc.

De manière générale, les procédés de stabilisation doivent permettre de répondre aux contraintes suivantes :

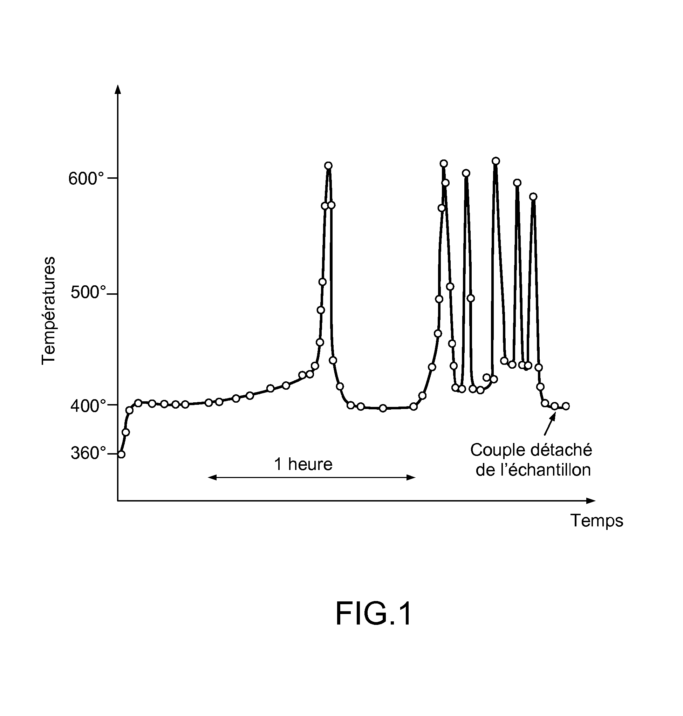

- la conversion du matériau UCx sous la forme d'un produit stabilisé type UOx ($U_3O_8$, $UO_2$, $UO_3$,...) doit être compatible avec les exigences des exutoires/entreposages/stockages envisagés par les autorités de sûreté nucléaire et l'ANDRA, l'agence nationale pour la gestion des déchets radioactifs ;
- l'application d'un procédé de stabilisation des matériaux UCx via un traitement thermique d'oxydation spécifique doit permettre de maîtriser la réaction d'oxydation qui est fortement exothermique et proscrire tout phénomène d'emballement non contrôlé au cours de la réaction ;
- la maîtrise, par un domaine paramétrique et borné, de la réactivité chimique du matériau (limitation de l'emballement thermique, sélectivité de la réaction d'oxydation, maîtrise de la température d'ignition) au cours du processus de traitement d'oxydation des matériaux UCx, pour éviter tout fonctionnement erratique. La figure 1 illustre ainsi la reprise brutale et incontrôlée de réactivité et plus précisément un exemple d'emballement thermique caractérisé par un échauffement pseudopériodique lors de l'oxydation d'un échantillon d'uranium métallique à 390°C (Yves Adda, Etude cinétique de l'oxydation de la nitruration et de l'hydruration de l'uranium, Rapport CEA n°757, (1958) ;
- la possibilité de minimiser la production de rejets gazeux et effluents, toujours onéreux et contraignants pour le milieu du nucléaire, par l'utilisation d'une plage de fonctionnement optimal du procédé permettant de stabiliser totalement et uniquement la phase $UC_2$ en proscrivant l'oxydation avec le carbone libre excédentaire présent dans le matériau UCx. L'objectif à terme est d'exploiter un procédé en milieu nucléaire (cellule blindée) par une méthode de traitement simple ne générant pas d'effluents liquides ;
- la confirmation de l'absence de réactivité des produits une fois ces derniers stabilisés sous forme oxydée, le matériau final devant être stable vis-à-vis de la réactivité à l'air et dans les conditions ambiantes de température et de pression ;
- la mise en oeuvre d'un procédé de stabilisation compatible avec des exigences exploitation semi-industrielles : durée de traitement réduite, robustesse du procédé notamment vis-à-vis de la variabilité de l'intrant (masse matériau, densité, porosité, phases) et indicateurs de suivi de contrôle tout au long du procédé.

Actuellement, des cibles UCx déjà utilisées sont entreposées dans l'attente d'un exutoire adapté et/ou d'un procédé de traitement ; c'est le cas, par exemple, au sein de l'installation ISOLDE (Isotope Separator On Line Detector) à Genève.

Il a déjà été décrit des procédés de retraitement chimique, et notamment dans la demande de brevet internationale : WO/2004/012206 qui présente un procédé d'oxydation électrochimique par voie de dissolution. Le traitement proposé le rend totalement incompatible avec le matériau UCx visé car l'application de ce procédé génère une quantité considérable d'effluents liquides (issus d'une dissolution chimique) ne répondant pas aux objectifs recherchés dans la présente invention.

Il existe également des publications scientifiques relatives à l'oxydation de carbures uranifères type UC/$UC_2$ qui peuvent être classées principalement en trois grandes familles selon la nature de l'oxydant employé : le dioxyde de carbone, l'eau liquide ou sous forme vapeur et le dioxygène, à différentes concentrations.

Concernant, les réactions d'oxydation des carbures d'actinides avec le $CO_2$: les auteurs Peakall, K.A. and Antill J.E. Oxydation of Uranium Monocarbide. J. Less-Common Metals, 4, (1961), 426-435, relatent des travaux d'oxydation réalisés sur de l'UC sous atmosphère de dioxyde de carbone comme gaz oxydant. Les résultats obtenus mentionnent que la réactivité des carbures avec le $CO_2$ est relativement lente et incompatible avec l'objectif de fournir un procédé industriel (notamment vis-à-vis du critère durée de traitement). Murbach et al., E. W. & G. E. Brand. 1965. "Pyrochemical reprocessing of uranium carbide". Summary Report. Atomics international, page 38, ont par ailleurs observé des réactivités très variables en fonction de la nature morphologique de l'UC qui aboutissent à des cycles d'oxydation inachevés et incomplets ce qui n'est pas acceptable pour l'application visée. Globalement, ces observations relatives à une diminution significative de la cinétique d'oxydation des carbures en présence de $CO_2$, ne sont pas compatibles avec le cahier des charges imposé et précité pour le retraitement du matériau cibles UCx qui limite en faveur d'une conversion plus rapide.

Concernant, les réactions d'oxydation des carbures d'actinides avec l'eau sous forme liquide et sous forme vapeur : plusieurs travaux donnés ci-après à titre d'exemple dont ceux cités dans les articles suivants : Bradley, M. « Hydrolysis of Uranium Carbides between 25 and 100°C » . II Uranium Dicarbide, Uranium metal Monocarbide Mixtures and Uranium Monocarbides- Dicarbide Mixtures. Inorganic Chemistry, 3, (1964), 189-195, Herrmann, B. and Herrmann. F.J. Cinétique d'oxydation du mono carbure d'uranium par l'oxygène sec ou humide, Rapport CEA, 19, (1968), montrent que les carbures réagissent avec l'eau et la vapeur d'eau. Les résultats mentionnent que la vapeur d'eau est un vecteur important du mécanisme d'oxydation et que la pré-exposition à l'air ou à une atmosphère humide faiblement oxydante augmente significativement leur réactivité. Il est à noter que les traitements d'oxydation des carbures avec de l'eau sous forme liquide sont totalement inadaptés pour le procédé envisagé avec le matériau cibles UCx au regard des fortes contraintes liées notamment au traitement des effluents que cela engendrerait par la suite. Bien que la présence de vapeur d'eau ait pour effet d'augmenter la réactivité des carbures notamment hyper-stoechiométrique par une vitesse de conversion en phase oxyde plus rapide, les études d'oxydation présentées dans ces articles sous atmosphère anisotherme et uniquement en présence de vapeur d'$H_2O$ seule, présentent deux inconvénients majeurs pour la définition d'un procédé adapté au matériau à base de carbure d'uranium, objet du procédé de stabilisation de la présente invention à cause :

- d'une conversion des carbures en phase oxyde moins rapide en présence de vapeur d'eau seule qu'en présence de dioxygène dans des conditions d'oxydations similaires ;
- de la formation de nouveaux produits gazeux comme décrit dans Litz, M. Uranium Carbides : « Their preparation, Structure and hydrolysis". PhD Thesis, Ohio State University NP-1453, (1945) : $CH_4$ (pour de l'UC), $C_2H_6$ (pour de l'$UC_2$) et surtout la production de dihydrogène $H_2$ (que cela soit à partir d'UC ou d'$UC_2$), en quantités potentiellement importantes et dont le caractère potentiellement explosif est fortement pénalisant pour la sûreté du procédé. Il en résulte que l'ensemble des résultats obtenus en présence de vapeur d'eau, majoritairement sur de l'UC, ne sont pas directement transposables au besoin spécifié pour le matériau UCx du fait des contraintes présentées ci-dessus ainsi que la nature de la variabilité de l'intrant (forte teneur en carbone excédentaire qui entraine une augmentation supplémentaire d'$H_2$ par hydrolyse/gazéification en cas d'absence de précaution particulière.

Enfin, concernant les réactions d'oxydation de l'UC et de l'$UC_2$ avec l'$O_2$, de nombreux travaux ont été publiés sur l'oxydation de carbures uranifères sous atmosphère de dioxygène à différentes teneurs. Néanmoins, il convient de préciser que ces travaux exceptés ceux de Nawada H.P. et al. Thermogravimetric study of the oxidation behaviour of uranium dicarbide, Journal of Thermal Analysis, 35, (1989), 1145-1155, sont relatifs au matériau UC de composition stoechiométrique et par conséquent, de nature et de comportement sensiblement différent du matériau UCx multiphasique visé par la présente invention. Ce dernier étant constitué de deux phases principales (de carbure d'uranium et de carbone libre sous forme graphitique), les seules données disponibles sur de l'$UC_2$ stoechiométrique montrent aussi des comportements à l'oxydation différents du fait de l'absence de carbone libre qui évolue lui-aussi au cours d'un traitement de stabilisation en fonction du champ paramétrique et des conditions opératoires appliquées.

De manière générale pour l'application des traitements thermiques d'oxydation, deux voies principales peuvent être dissociées :

- un traitement d'oxydation des carbures effectué à températures variables (régime anisotherme) ;
- un traitement d'oxydation des carbures appliqué à température fixée (régime isotherme).

Un régime d'oxydation anisotherme est incompatible pour l'application d'un procédé de stabilisation selon la présente invention car il ne permet pas de garantir des conditions d'oxydation stables, sûres et reproductibles. En effet, une augmentation progressive de la température appliquée au cours du traitement et par conséquent l'apport d'énergie sous forme thermique au système conduit à un risque d'emballement non maitrisé et à des conditions instables d'oxydation des carbures qui entraine :

- une augmentation soudaine de la température locale et de la cinétique d'oxydation (comme illustré en figure 1) ;
- un emballement non maitrisé de la réaction et une potentielle auto-inflammation spontanée du matériau UCx (tout particulièrement sous forme de poudre) qui s'accompagne d'un violent pic exothermique sur la base d'une enthalpie de réaction d'oxydation de l'ordre de - 1450kJ/mol.

Pour éviter ces phénomènes et piloter un procédé par une modération de l'apport du comburant à partir d'une charge combustible et d'une température d'activation prédéfinies (principe de sûreté de fonctionnement par ailleurs pertinent pour démontrer la maîtrise du procédé), un traitement d'oxydation sous atmosphère isotherme doit être envisagé.

Par ailleurs, des différences structurales et morphologiques influencent grandement le comportement à l'oxydation de carbures uranifères, telles que :

- la nature initiale du matériau : l'UC a un comportement à l'oxydation différent de l'$UC_2$ (différence de gain massique) ce qui est également valable pour l'UCx, riche en carbone excédentaire ;
- la morphologie : une poudre a une température d'ignition sensiblement différente d'une ou plusieurs pastilles de volumes et de densités prédéfinies (influence par exemple de la hauteur du lit de poudre, de la masse traitée, etc.).

Parmi les techniques connues d'oxydation, on trouve notamment plusieurs études d'oxydations menées sur de l'UC obtenu par carbothermie sous forme de poudre en condition isotherme et notamment celle décrite dans l'article de Ohmichi, T. (1968) « The Oxidation of UC and UN powder in Air », journal of nuclear science and technology, 5, 600-602. L'analyse fine des résultats montre que les données ne sont pas transposables sur des matériaux cibles type UCx du fait de plusieurs contraintes : une quantité initiale de matière limitée (masse UC inférieure à 30 mg), un domaine d'application de températures d'oxydation trop élevées (jusqu'à 1400 °C) associé à une composition et à une forme géométrique du carbure initial différente : l'UC ne fournit pas le même gain de masse que l'$UC_2$ sous oxydation et la géométrie de l'UC (poudre de granulométrie de 150 $\mu$m) n'est pas représentative des cibles UCx à stabiliser, visées dans la présente invention (assimilables pour la majorité d'entre-elles à des pastilles centimétriques poreuses).

D'autres travaux menés sur de l'UC massif comme ceux de Herrmann, « Cinétique d'oxydation du mono carbure d'uranium par l'oxygène sec ou humide », Rapport CEA, 19, (1968) montrent également des profils de variations de masse sensiblement différents de ceux obtenus avec des matériaux cibles UCx du fait de la différence de la teneur initiale du carbone dans la phase carbure (augmentation supérieure à 60% du gain massique pour la formation d'un même oxyde $U_3O_8$ entre l'UC et l'$UC_2$ oxydés dans des conditions similaires).

Mukerjee, S. K., G. A. R. Rao, J. V. Dehadraya, V. N. Vaidya, V. Venugopal & D.D.Sood (1994) "The oxidation of uranium monocarbide microspheres" Journal of Nuclear Materials, 1, 97-106, et Murbach, E. W. & G. E. Brand. 1965 "Pyrochemical reprocessing of uranium carbide" Summary Report. Pages: 38. Atomics international, ont également analysé l'effet de la masse initiale d'UC (de 30 à 200 mg pour Mukerjee et jusqu'à 10kg pour Murbach) sur la cinétique d'oxydation. Les résultats présentés montrent qu'ils ne sont pas transposables pour le matériau à base de carbure d'uranium de la présente invention, car les travaux n'ont pas été menés en condition isotherme (Mukerjee) et les échantillons d'UC avaient été initialement synthétisés par fusion à l'arc (Murbach), présentant par conséquent des propriétés structurales en terme de densité apparentes radicalement différentes de celles du matériau à base de carbure d'uranium de la présente invention.

Les rares éléments disponibles sur l'oxydation de l'$UC_2$ et donc les plus représentatifs pour le procédé visé vis-à-vis de la composition structurale des cibles UCx concernent des travaux d'oxydation menés par Nawada et al. Thermogravimetric study of the oxidation behaviour of uranium dicarbide, Journal of Thermal Analysis, 35, (1989), 1145-1155. Les traitements d'oxydation apportée sur l'$UC_2$ ont été réalisés sous condition anisotherme suivie de longs paliers d'oxydation allant de 4 à plus de 100 heures. L'ensemble du cycle d'oxydation s'étalant par conséquent sur une durée totale de 118 heures. Les résultats obtenus ont pu être divisés en 4 étapes pour faciliter la compréhension de la réaction d'oxydation de l'$UC_2$ en $U_3O_8$:

- une première étape caractérisée par l'oxydation progressive et très lente de l'$UC_2$ en oxyde intermédiaire $\alpha$-$UO_3$ avec un gain massique de l'ordre de plus de 19% pour des températures variant de 25 à 260°C ;
- une deuxième étape caractérisée par l'oxydation du carbone provenant de la phase $UC_2$ initiale qui induit une double perte massique pour des températures allant de 260 à 410 °C ;
- une troisième étape correspondant à l'oxydation de la phase $\alpha$-$UO_3$ en phase oxyde $U_3O_8$ qui entraine également une perte de masse pour des températures allant de 410 à 560°C ;
- une quatrième et dernière étape qui se définit par l'oxydation du carbone libre résiduel, supposé présent dans le matériau de départ, pour des températures d'oxydation comprises entre 560 et 690°C accompagnée également par l'enregistrement d'une perte de masse.

Bien que cette étude fournisse des données de compréhension pour l'oxydation de l'UC$_2$, elle présente des éléments incompatibles pour l'application d'un procédé de conversion de l'UCx en U$_3$O$_8$ pour plusieurs raisons :

- des conditions de programmations thermiques inadaptées (mélange de régimes d'oxydation anisothermes suivis de longs paliers d'oxydation) qui ne satisfont pas à l'application d'un traitement thermique d'oxydation maîtrisant les potentielles variations de réactivité, essentielles pour garantir la sûreté du procédé ;
- une durée d'oxydation excessive : la durée totale de l'oxydation de l'UC$_2$ dans cette étude est estimée à plus de 118 heures ce qui la rend incompatible avec un traitement semi-industriel qui exige l'application d'un procédé de conversion rapide des phases carbures en U$_3$O$_8$ ;
- des données d'entrée manquantes comme par exemple la masse initiale UC$_2$ (non mentionnée) ou l'absence de propriétés physiques du matériau d'entrée UC$_2$ (en terme de densité, porosité, géométrie des pastilles) qui ne garantissent pas une flexibilité vis-à-vis du traitement d'oxydation présenté. Les données fournies dans cette étude montrent que le matériau est par ailleurs quelque peu différent du matériau UCx précité (différence notable de stoechiométrie du carbone libre dans le matériau initial modifiant sensiblement le comportement à l'oxydation) ;
- l'absence de résultats relatifs liés à la réactivité chimique de l'UC$_2$ au cours des différentes étapes d'oxydation (enthalpie de chacune des réactions intermédiaires d'oxydations) mais également la variation des grandeurs mesurées en sortie (masse, gaz CO$_2$ produits) en fonction des paramètres d'entrée (masse, concentration en O$_2$).

Ces éléments manquants montrent que cette étude, pertinente notamment pour la compréhension du mécanisme d'oxydation de l'UC$_2$, ne permet pas la définition d'un procédé car elle est incompatible avec les exigences de sûreté d'un procédé de stabilisation vis-à-vis de la maîtrise de l'emballement thermique et du contrôle de la réaction d'oxydation par l'apport maîtrisé d'une pression partielle d'O$_2$, d'un débit contrôlé et d'une masse adaptée. Par ailleurs, les critères permettant de garantir la fin de la réaction hormis un traitement total à haute température qui n'est pas compatible avec les objectifs/contraintes liées à la présente invention ne sont pas identifiés.

Au regard de l'ensemble des données existantes dans la bibliographie, il apparaît qu'aucun traitement thermique d'oxydation ne puisse être adapté au matériau cibles de carbure d'uranium, de composition hyper-stoechiométrique en carbone, garantissant un traitement de conversion de l'UCx en UOx par un procédé d'oxydation rapide, sûr et robuste et répondant aux fonctions recherchées précitées.

C'est pourquoi la présente invention propose une solution pour résoudre le problème complexe de la stabilisation de façon sûre, pilotable, robuste et accélérée, d'un matériau composite de formule UCx +yC, avec x réel pouvant être égal ou supérieur à 1, y réel étant supérieur à 0.

La solution de la présente invention permet de disposer d'un procédé industriel prenant en compte les contraintes liées à la nécessité de limiter la production d'effluents gazeux ou liquides (exploitation en milieu nucléaire à l'intérieur de cellules blindées) tout en répondant aux exigences/exutoires imposées par les autorités de sûreté vis-à-vis de la conversion de l'UCx en déchets de types UOx (U$_3$O$_8$ principalement) et ce par un traitement de stabilisation maîtrisé à tout instant de la réaction.

Plus précisément la présente invention a pour objet un procédé de stabilisation chimique d'un composé de carbure d'uranium répondant à la formule :

UCx + yC avec x, y réels x $\geq$ 1 et y>0, placé dans une enceinte de stabilisation caractérisé en ce qu'il comprend les étapes suivantes :

- une étape de montée en température de la température interne de ladite enceinte à une température dite d'oxydation dudit composé à base de carbure d'uranium comprise entre environ 380°C et 550°C, ladite enceinte étant alimentée par un gaz neutre ;
- une étape de traitement d'oxydation isotherme à ladite température d'oxydation, ladite enceinte étant placée sous pression partielle d'O$_2$ ;
- une étape de contrôle de l'achèvement de la stabilisation dudit composé comprenant le suivi de la quantité de dioxygène consommée et/ou de dioxyde de carbone dégagée ou de dioxyde de carbone et de monoxyde de carbone dégagées, jusqu'à au moins l'atteinte d'une valeur d'une consigne d'entrée pour le dioxygène, d'une valeur minimale seuil pour ladite quantité de dioxyde de carbone ou de valeurs seuil pour le dioxyde de carbone et le monoxyde de carbone.

Selon une variante de l'invention, l'étape de contrôle de l'achèvement de la stabilisation comporte en outre le suivi de variation de masse des composé solides à base de carbone et d'uranium dans l'enceinte, une augmentation de masse étant corrélée à l'oxydation de carbure d'uranium en cours.

Selon une variante de l'invention, l'étape de contrôle de l'achèvement de la stabilisation est effectuée par l'application d'une montée en température de la température interne de ladite enceinte comprise entre ladite température d'oxydation et la température d'oxydation du carbone (température exclue) et suivi de la présence de $CO_2$ dégagé.

Selon une variante de l'invention, le procédé comprend l'introduction d'une pression partielle en vapeur $H_2O$ dans ladite enceinte avant et/ou pendant l'étape d'oxydation. Avantageusement, il peut alors comprendre la détection de $H_2$ comme marqueur de suivi de fin d'oxydation, dans ladite enceinte.

Selon une variante de l'invention, l'étape de contrôle de l'achèvement de la stabilisation est effectuée par l'introduction (en fin supposée de traitement c'est-à-dire sur franchissement à la baisse du seuil du $CO_2$) d'une quantité de vapeur d'eau dans ladite enceinte à la température d'oxydation et le contrôle de la teneur en $H_2$ dans l'enceinte qui, si elle est inférieure à un seuil, permet de confirmer la fin de réaction d'oxydation de l'UCx.

Selon une variante de l'invention, l'étape de contrôle de l'achèvement de la stabilisation comprend une opération de mise en sur-pression des gaz de réaction présents dans ladite enceinte de manière à accélérer la fin de la réaction d'oxydation dudit composé.

Selon une variante de l'invention, l'étape de contrôle de l'achèvement de la stabilisation comprend en outre un cycle d'opération de mise en sur-pression et d'opération de mise en sous-pression des gaz de réaction présents dans ladite enceinte.

Selon une variante de l'invention, le procédé comprend une étape préliminaire de détermination d'une température optimale d'oxydation par analyse thermogravimétrique d'un échantillon de composé UCx+yC.

Selon une variante de l'invention, la température optimale d'oxydation variant en fonction du conditionnement dudit carbure d'uranium est comprise entre environ 380°C et 550°C.

Dans le procédé selon l'invention, ledit composé peut présenter une morphologie de type poudre ou de type pastille poreuse ou dense.

L'invention a aussi pour objet un dispositif de stabilisation chimique d'un composé de carbure d'uranium comprenant une enceinte comprenant un four d'oxydation, caractérisé en ce qu'il comprend :

- un module d'alimentation en gaz permettant de générer des atmosphères neutres d'argon ou d'azote ou bien partiellement oxydantes en $O_2$ et/ou $H_2O$ à l'aide d'un circuit d'alimentation externe en transmettant des flux de gaz audit four d'oxydation ;
- un module d'alimentation électrique alimentant le four d'oxydation en lui transmettant un flux de consigne permettant l'imposition de la température ;
- ladite enceinte transmettant un flux de gaz sortants à un module de régulation et d'asservissement ;
- ledit module de régulation et d'asservissement comprenant un premier module de mesure de température et de puissance thermique et un second module d'analyse des différentes quantités de gaz présents dans le four d'oxydation, transmettant un flux de consigne auxdits moyens d'alimentation en gaz et auxdits moyens d'alimentation électrique.

Selon une variante de l'invention, le module d'alimentation en gaz comprend un circuit générateur de vapeur d'eau, couplé à un régulateur de pression de vapeur d'eau, une alimentation en Argon ou Azote, une alimentation en Argon et/ou Dioxygène, couplée à un régulateur de pression de dioxygène.

Le module de régulation et d'asservissement comprenant ainsi un module permettant des mesures de température, de puissance thermique et un module d'analyses de concentrations en différents gaz tels que $O_2$, $CO_2$, CO, $H_2O$, $H_2$ permet de rétroagir en continu sur les paramètres de pilotage du procédé tels que la pression partielle oxydante, la température de stabilisation en suivant en temps réel la température et la puissance thermique du four d'oxydation.

Selon une variante de l'invention, ladite enceinte est en outre équipée de moyens de pesée des composés solides à base de carbone et d'uranium.

L'invention sera mieux comprise et d'autres avantages apparaîtront à la lecture de la description qui va suivre donnée à titre non limitatif et grâce aux figures annexées parmi lesquelles :

- la figure 1 illustre un exemple d'emballement thermique caractérisé par un échauffement pseudopériodique non maîtrisé lors de l'oxydation d'un échantillon d'uranium métallique à 390°C ;
- la figure 2 illustre un schéma bloc montrant les différents moyens employés pour mettre en oeuvre le procédé de la présente invention ;
- la figure 3 illustre les différentes phases d'opérations selon le procédé de l'invention ;
- la figure 4 illustre l'évolution de la masse d'un composé UCx en fonction du temps, pour différentes températures d'oxydation isotherme ;
- la figure 5 illustre les variations de dégagement de $CO_2$ et de surchauffes locales) détectées lors de l'application du procédé respectivement pour deux températures d'oxydation différentes ($T_{oxydation}$=400 puis 700°C) ;
- la figure 6 illustre la variation de masse en pourcentage et le flux de chaleur dégagé, au cours de l'oxydation en régime isotherme de l'UCx pour trois concentrations différentes en dioxygène ;
- la figure 7 illustre les profils de variations de masse obtenus au cours de l'oxydation de l'UCx sous atmosphère oxydante en condition isotherme pour différentes températures d'oxydation ;

- la figure 8 illustre les thermogrammes montrant l'influence de la nature géométrique sur le procédé de stabilisation du matériau UCx à température modérée $T_{oxydation}$= 400 °C.

De manière générale, le procédé de la présente invention comprend :

- une mise en température du matériau sous atmosphère neutre pour être dans les conditions futures d'oxydation ;
- une opération de stabilisation contrôlée de la phase $UC_x$ + yC par un traitement d'oxydation isotherme dans une gamme de température optimale [380°C ; 550°C] (notamment en fonction de la nature, de la quantité, de la morphologie et de la composition des valeurs x et y du matériau intrant) sous une pression partielle d'$O_2$ (de 5 à 25% d'$O_2$) (de préférence 10% $O_2$). Au cours de cette étape, les conditions de traitement sont particulièrement choisies afin de s'assurer d'une réactivité des produits et d'un contrôle de cette réactivité par l'apport d'oxygène uniquement. Une vérification du bon déroulement du procédé de traitement d'oxydation est faite par le suivi en temps réel du dioxygène $O_2$ consommé et du dioxyde de carbone $CO_2$ / monoxyde de carbone CO dégagés ;
- une opération de vérification de l'achèvement de la stabilisation du matériau composite. Cette dernière étape peut notamment être réalisée par l'application simultanée d'une augmentation prononcée mais contrôlée de la température d'oxydation ou l'insertion séquencée d'une pression partielle en vapeur d'$H_2O$ ayant pour but de favoriser l'oxydation de derniers fragments d'$UC_2$ éventuellement non oxydés pendant la première phase d'oxydation ou la variation de la pression des gaz de réaction dans le procédé (variation positive (bornée à 1 bar max) ou négative (bornée à 1 mbar min) ou bien encore par une combinaison de deux ou des trois variations.

La détection de la réactivité sur les teneurs des gaz de réaction (CO, $CO_2$, $H_2$) de ce changement de régime permet de révéler l'achèvement de la réaction de stabilisation sans craindre une réactivité importante d'une partie des déchets pouvant ne pas être potentiellement encore stabilisée lors de l'étape précédente. En l'absence de réactivité de ces gaz, l'arrêt de traitement est prononcé.

La description détaillée ci-après a pour but de révéler qu'au regard de la nature chimique du matériau à traiter UCx +yC, des quantités et volumes pouvant être mis en jeu pour notamment des applications visées dans la présente invention, soit de grandes quantités de déchets à retraiter supérieures typiquement à plusieurs kilogrammes, le procédé de la présente invention permet d'assurer d'une stabilisation complète du matériau sous une forme oxydée stable à l'air à température et à pression ambiante en imposant une température de traitement adéquate avec un débit gazeux et une concentration d'$O_2$ optimale.

Or, la spécificité structurale dudit matériau composite (composé biphasique notamment en $UC_2$ par exemple et en carbone libre sous forme graphitique, hétérogénéité structurale, porosité élevée) induit des contradictions en terme d'objectif voire de contraintes physiques qui rendent particulièrement intéressantes différentes optimisations du procédé de la présente invention et précisées dans la suite de la description.

Ces difficultés reposent notamment sur les contradictions suivantes :

- la nécessité de garantir la stabilisation du déchet UCx+yC sans pour autant convertir la totalité du carbone (yC) présent initialement dans le matériau UCx+yC ou présent sous la forme d'intermédiaires réactionnels issus des différentes réactions d'oxydation. En effet, la conversion totale de ces formes carbonées dégage une forte quantité de gaz ($CO_2$, CO principalement) très pénalisant et donc préjudiciable en termes de retraitement de gaz (rejet important) et de durée d'application d'un procédé à une échelle type semi-industrielle. En outre, le choix d'une stabilisation totale de l'ensemble des constituants du matériau UCx+yC ($UC_2$, UC et Carbone) implique de travailler à des températures d'oxydation plus élevées ce qui favorise significativement le relâchement d'éléments radioactifs en sortie de gaz effluents ;
- une stabilisation adaptée spécifiquement à une partie des constituants du matériau UCx+yC (la phase carbure $UC_2$, UC) est rendue d'autant plus délicate que la réaction de stabilisation par oxydation est fortement exothermique (difficulté de maîtrise de la réactivité) ce qui va à l'encontre de l'objectif visé ;
- la maîtrise de la réactivité est rendue d'autant plus difficile, au-delà des phénomènes d'exothermicité, qu'elle est conditionnée par l'accessibilité de l'oxydant sur les sites réactionnels, et dépend des sous produits formés (UOx) qui peuvent créer des barrières limitantes de la réaction pouvant rompre plus ou moins brutalement lors du traitement.

Le procédé de la présente invention doit ainsi permettre la maîtrise des contraintes physiques listées ci-dessus par l'exploitation d'un domaine de fonctionnement optimal afin :

- d'oxyder totalement mais uniquement la phase $UC_x$ sans brûler totalement le graphite excédentaire présent dans le matériau initial (yC) mais aussi éventuellement dans le conteneur cible pouvant être employé, composé également en graphite et estimé classiquement à plus d'un kg en masse ;

- de limiter le temps de traitement de stabilisation/conversion du matériau UCx par une plage de températures d'oxydation étudiées permettant d'aboutir à une cinétique d'oxydation de l'UCx en UOx rapide ;
- de limiter seulement la production de $CO_2$ résultant uniquement à l'oxydation de l'$UC_x$ en $U_3O_8/UO_2$ en inhibant le fort dégagement de $CO_2$ produit par l'oxydation du carbone/graphite excédentaire dont les volumes mis en jeu par le matériau UCx+yC et le conteneur en graphite des cibles UCx impliquent un procédé de traitement long à mettre en oeuvre ;
- de limiter la volatilité et la propagation de produits de fission ou d'activation potentiels en les confinant autant que possible au sein des cibles UCx à traiter par l'utilisation d'une température d'oxydation adaptée et modérée ;
- de proposer un système de pilotage du procédé permettant la maîtrise de la réactivité chimique et la vérification d'une bonne stabilisation du matériau une fois ce dernier oxydé par le procédé ;
- d'empêcher toute forme instable d'oxydation du matériau UCx notamment vis-à-vis de la variabilité de la géométrie (pastilles, poudre, billes sphériques) et de la nature du matériau d'entrée à base de carbures d'uranium.

Exemple de dispositif permettant de mettre en oeuvre le procédé de stabilisation de composé UCx + yC,

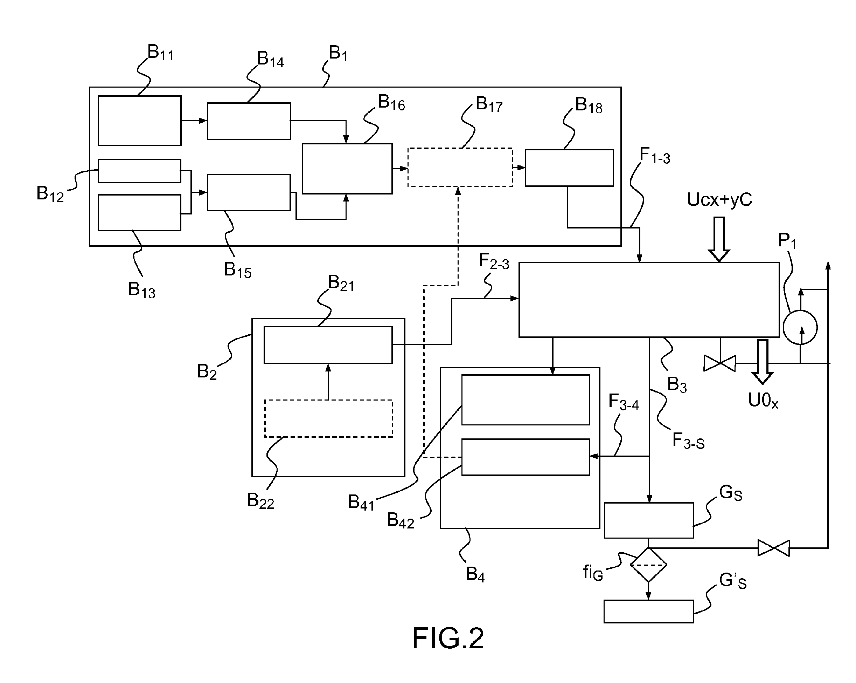

La figure 2 schématise un exemple de dispositif permettant de réaliser le traitement d'oxydation isotherme du composé sous pression partielle d'$O_2$ dans un four d'oxydation :

- un premier module $B_1$ sert à l'alimentation en gaz et permet de générer des atmosphères neutres d'argon ou d'azote ou bien partiellement oxydantes en $O_2$ et/ou $H_2O$ à l'aide d'un circuit d'alimentation externe. Ces atmosphères sont régulées en permanence par des jauges de pression et de débit puis injectées dans le four d'oxydation pour procéder à la stabilisation du matériau composite en UCx + yC. Plus précisément, ce module $B_1$ peut comprendre notamment un circuit générateur de vapeur d'eau $B_{11}$, couplé à un régulateur de pression de vapeur d'eau $B_{14}$, une alimentation en Argon/Azote $B_{12}$, une alimentation en Argon/Dioxygène $B_{13}$, couplée à un régulateur de pression de dioxygène $B_{15}$, les deux régulateurs alimentant un mélangeur $B_{16}$ en $O_2$ et/ou $H_2O$ en direction d'un régulateur de pression d'entrée $B_{17}$ relié à un régulateur en débit de sortie de gaz $B_{18}$ pour alimenter via un flux $F_{1-3}$, une enceinte correspondant à un troisième module $B_3$ de traitement thermique de stabilisation comprenant un four d'oxydation dans lequel a lieu la stabilisation du composé ;
- un second module $B_2$ d'alimentation électrique est prévu pour alimenter le bloc $B_3$ via un flux de consignes $F_{2-3}$ et comporte un module d'alimentation électrique $B_{21}$ et un module de programmation $B_{22}$ du cycle thermique de stabilisation adapté à la variabilité du matériau composite d'entrée ;
- le troisième module $B_3$ comprend un four d'oxydation à atmosphère régulée, il permet également le chargement du matériau d'entrée réparti sur une nacelle optimisée vis-à-vis de la variabilité de la nature et de la morphologie du matériau intrant puis le déchargement du déchet stabilisé en vue d'analyses post-mortem potentielles (en particulier la pesée du résidu final et le prélèvement d'un résidu pour effectuer des caractérisations) avant son conditionnement et un entreposage ultérieur ;
- un quatrième module $B_4$ est prévu pour assurer des fonctions de régulation et d'asservissement ; il comprend un module $B_{41}$ permettant des mesures de température, de puissance thermique et un module d'analyses $B_{42}$ de concentrations en différents gaz tels que $O_2$, $CO_2$, $CO$, $H_2O$, $H_2$. Ce quatrième module permet de rétroagir en continu sur les paramètres de pilotage du procédé notamment : la pression partielle oxydante, la température de stabilisation en suivant en temps réel la température et la puissance thermique du four d'oxydation, la consommation de gaz ($O_2$, $N_2$, Ar, $H_2O$) et la production de réactifs gazeux ($CO_2$, $CO$, $H_2$, $CH_4$, $C_2H_6$). Optionnellement, l'évolution de la masse UCx au cours de son oxydation est également enregistrée pour identifier les différentes réactions d'oxydation, discerner les phases en présence et contrôler le taux de conversion de la charge à stabiliser.

Les flux gazeux sortant de l'enceinte $F_{3S}$, sont d'une part filtrés avant rejet via une pompe P1 et un filtre $fi_G$ et d'autre part analysés via un prélèvement desdits gaz $F_{3-4}$.

Description détaillée des différentes étapes mises en oeuvre dans le procédé de l'invention dans le cadre d'un exemple :

1) L'étape de montée en température à une température dite d'oxydation peut avantageusement être comprise entre environ 380°C et 550°C, et effectuée dans une enceinte sous atmosphère inerte.

Pour parvenir à un régime d'oxydation dans des conditions isothermes, le matériau UCx +yC est progressivement chauffé sous gaz inerte jusqu'à la température d'oxydation d'application du procédé. Le choix de cette température d'oxydation est dépendant en particulier du type de four et de ses performances, de la nature et de la morphologie du matériau d'entrée, de la géométrie de la nacelle de chargement et de la disposition du matériau à oxyder à l'intérieur de cette nacelle. Des essais préalables sur des quantités réduites sont potentiellement nécessaires pour un ajustement au mieux de la température de traitement (et seront décrits ultérieurement dans la présente description). La durée de cette première étape peut typiquement être de l'ordre d'une soixantaine de minutes.

2) Après une période de stabilisation sous atmosphère inerte (durée moyenne 60 mn), un gaz constitué d'une pression partielle d'$O_2$ est introduit dans le four d'oxydation. De manière générale, après application du procédé à des températures $T_{oxydation}$ variant de 380 à 550°C, le matériau UCx, de composition chimique initiale $UC_2$ + carbone graphitique $C_L$ et de géométrie type « pastilles », s'oxyde et forme une « poudre foisonnante homogène », de composition chimique $U_3O_8$ + carbone graphitique $C_L$. L'expansion volumique du matériau UCx après traitement du procédé est de l'ordre de 50%. L'oxydation du matériau UCx est suivie en temps réel avec un analyseur de gaz en sortie du four d'oxydation. Le traitement d'oxydation est arrêté lorsque la concentration d'$O_2$ atteint la valeur imposée en entrée et lorsque la concentration de $CO_2$ dégagée au cours de l'oxydation des cibles UCx est inférieure à une valeur seuil pouvant typiquement être de l'ordre de 100 ppm.

3) L'oxydation de l'UCx +yC peut avantageusement être suivie par l'analyse de l'évolution de masse (si le dispositif de mesure le permet) et par la mesure en temps réel des gaz en sortie du procédé en particulier : le dioxygène $O_2$ suivi de la consommation, le $CO_2$ produit par l'oxydation de l'UCx sous forme oxyde UOx, optionnellement le monoxyde de carbone CO et le dihydrogène $H_2$ dégagé lors d'ajout programmé de séquence de vapeur d'$H_2O$ au cours de réaction. En effet, il peut être intéressant d'utiliser de la vapeur d'eau également pour une stabilisation plus douce via une oxydation ménagée de l'oxygène.

4) La stabilisation du matériau UCx est considérée comme terminée lorsque :

- la masse initiale du matériau à traiter atteint un gain de masse stabilisé $\Delta m$ compatible avec la formation d'UOx, principalement l'$U_3O_8$ (la variation de masse $\Delta m$ pouvant typiquement être comprise entre 6% et 10%) ;
- la concentration d'$O_2$ en sortie atteint la valeur imposée en entrée du procédé (de préférence 10% en concentration volumique) ;
- les gaz produits CO, $CO_2$, $H_2$ atteignent une valeur inférieure à une valeur seuil (typiquement inférieure à 100ppm) ;
- le matériau UCx oxydé ne réagit plus après sollicitations (absence de réactivité thermique) par un écart en température $\Delta T$, en concentration ($\Delta[O_2]$ par exemple), en atmosphère humide ($\Delta[H_2O]$) ou en pression $\Delta P$.

Il est à noter que les sollicitations peuvent être les suivantes :

- l'augmentation $\Delta T$ rapide mais contrôlée de la température de traitement d'oxydation tel que $T_{oxydation}+\Delta T<T_{MAX}$, $T_{oxydation}$ étant la température d'application du traitement d'oxydation ($T_{oxydation}$ compris entre 300 et 550°C) et $T_{MAX}$ la température maximale admissible avant l'oxydation du carbone libre excédentaire ($T_{MAX}$ voisin de 560°C), l'absence de consommation d'$O_2$ et de libération de $CO_2$ au cours de cette sollicitation marquant l'arrêt du procédé ;
- la variation de la pression dans le four. Une variation de pression facilite la pénétration des gaz au coeur de la masse à oxyder et favorise la cinétique réactionnelle. Pour ce faire, un cycle de dépression ($P_{min}$ voisin de 1 mbar)-compression ($P_{max}$ voisin de 1 bar) peut être opéré grâce un système de pompage et d'électrovanne relié au four d'oxydation ;
- l'ajout d'une teneur résiduelle de vapeur d'eau soit avant, pendant ou après le traitement afin de faciliter l'oxydation préférentielle de matériaux UCx en particulier à forte densité spécifique à l'oxydation préférentielle de billes $UC_2$ sous atmosphère oxydante humidifiée). L'ajout de vapeur d'$H_2O$ est limité à 5% max volumique pour exclure la présence d'une atmosphère trop chargée en $H_2$ (valeur maximale de sûreté admissible 5% $H_2$ en concentration volumique), le gaz $H_2$ étant généré lors de l'oxydation de l'UCx avec la vapeur d'$H_2O$. L'introduction d'$H_2O$ en fin de cycle représente un avantage dans la mesure où cela permet d'utiliser l'$H_2$ comme nouveau traceur gazeux d'une oxydation spécifique de l'UCx et en toute sûreté dans le cas d'une reprise de réactivité du matériau UCx, car les quantités produites ont alors significativement plus faibles du fait que le matériau UCx est déjà stabilisé en majeure partie sous la forme oxydée et du fait de la limitation de la température (réaction de gazéification impossible pour $T_{oxydation}<T_{MAX}$ et du fait de la limitation de la concentration [$H_2O$]) ;
- il est encore possible d'effectuer une combinaison simultanée des différentes sollicitations précitées.

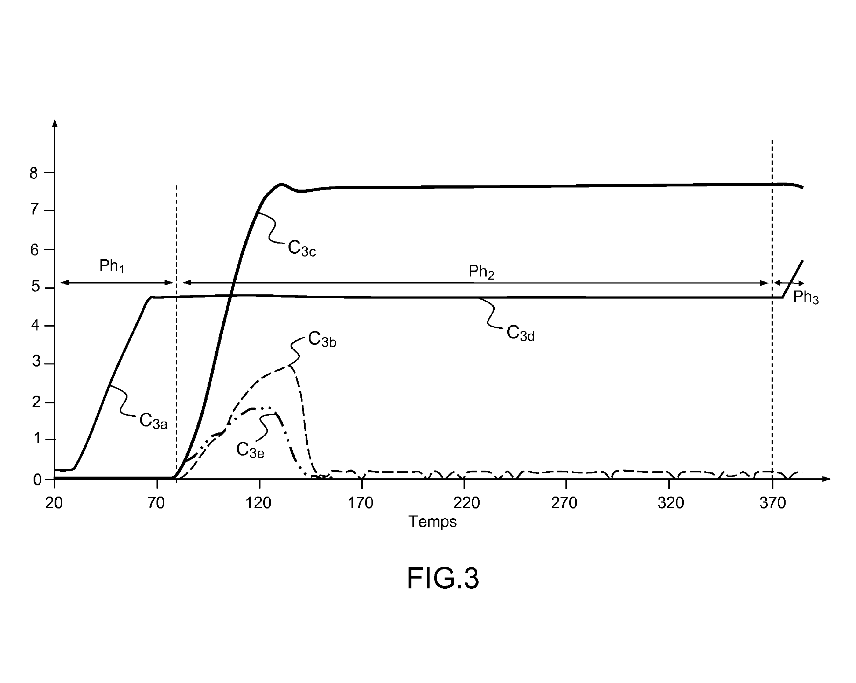

La figure 3 illustre l'ensemble de ces étapes schématisées en phase $Ph_1$, $Ph_2$ et $Ph_3$. La courbe $C_{3a}$ est relative à l'évolution de la température en fonction du temps, la courbe $C_{3b}$ est relative à la quantité de $CO_2$ dégagé, la courbe $C_{3c}$ est relative à l'évolution de la masse des composés solides, la courbe $C_{3d}$ est relative à la quantité d'$O_2$ et la courbe $C_{3e}$ est relative à la quantité de $H_2$ présente dans la vapeur d'eau.

Typiquement, on peut avoir une pression partielle oxydante imposée de 10%.

Pour atteindre ces critères de bon déroulement du procédé, le Demandeur a mis en évidence que l'on peut avantageusement définir au préalable des températures optimales de stabilisation comprises entre 300 et 550°C. Ces températures sont judicieusement choisies pour favoriser uniquement l'oxydation de la phase $UC_2$ en $UO_x$ sans altérer le graphite excédentaire présent dans le matériau UCx initial, l'objectif étant d'oxyder au minimum le graphite du matériau et de son conteneur.

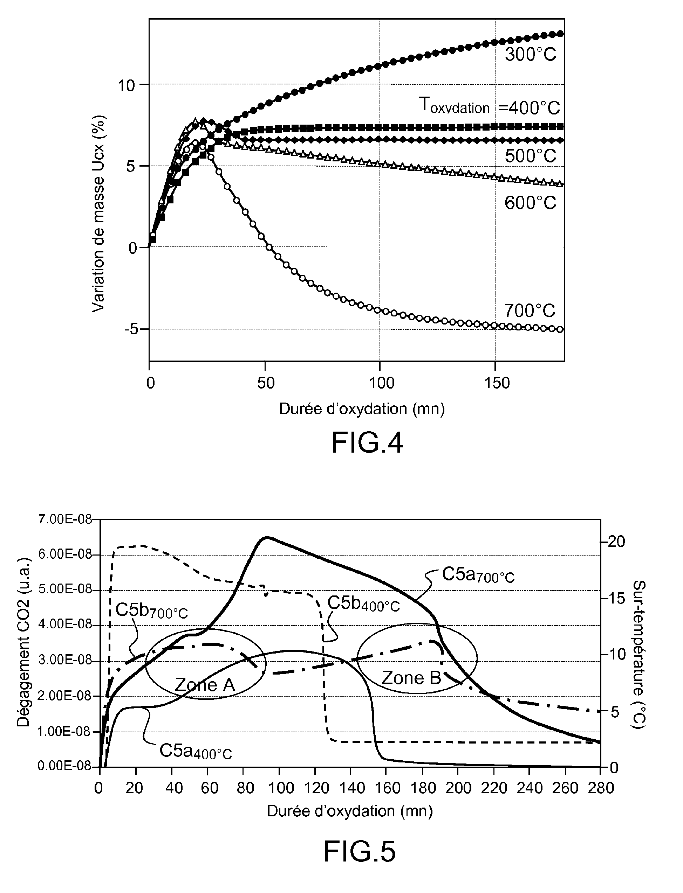

Cette étape d'optimisation de la température d'oxydation est illustrée ci-après plus précisément dans le cas d'un matériau de composition $UC_2$+2C. Ce matériau UCx étant multiphasique et hétérogène, son oxydation dans des conditions isothermes a fait l'objet d'une analyse approfondie par le Demandeur. Pour montrer que la réponse souhaitée du matériau suite à l'application d'un traitement de stabilisation dépend de nombreux paramètres et en particulier d'une gamme optimale de températures d'oxydation, un exemple de réseaux d'isothermes, obtenus par analyses thermogravimétriques et thermodifférentielles à pression partielle d'$O_2$ de 10%, est représenté comme exemple précis sur la figure 4. Chaque courbe représente l'évolution de la variation de masse du matériau UCx en fonction du temps pour différentes températures d'oxydation notées $T_{oxydation}$. Une augmentation de masse détectée, traduit le fait que le matériau UCx, de formule chimique initiale $UC_2$+$yC_L$ ($C_L$ symbolisant le graphite excédentaire présent dans le matériau UCx initial), s'oxyde pour former un composé chimique solide de type $UO_z$+$yC_L$ et/ou $UO_z$. Lorsqu'une perte de masse est mesurée, elle traduit le fait que l'oxydation d'un solide réactif en gaz a lieu ce qui correspond dans le présent cas, à l'oxydation d'une forme carbonée en $CO/CO_2$.

Il apparait ainsi que pour une température $T_{oxydation}$ voisine de 300°C, la cinétique d'oxydation du matériau UCx en phase $UO_z$ (ici en $U_3O_8$ à titre d'exemple) est progressive et assez lente.

Il est rappelé que la réaction principale en cours de processus d'oxydation est la suivante :

$$UC_2+2C_L+4/3O_2 \rightarrow 1/3U_3O_8+2C_{UCx}+2C_L$$

et conduit à une augmentation de masse théorique $\Delta m_{théorique}$=15%. Il convient donc de comparer, les gains de masse obtenus avec les gains de masse théoriques.

A cette température, aucun rejet gazeux en $CO_2$ ne doit avoir lieu. Ce qui a été confirmé à l'aide d'un analyseur de gaz couplé en sortie de l'appareillage thermogravimétrique.

Pour une température $T_{oxydation}$ voisine de 400°C, la prise de masse est plus rapide et conduit à l'obtention d'un palier bien défini montrant que le matériau UCx oxydé n'évolue plus, bien que ce dernier soit toujours sous atmosphère oxydante. Cette température optimale d'oxydation permet donc une conversion rapide et stable du matériau UCx en phase oxyde (tout particulièrement $U_3O_8$) qui se définit dans cet exemple par la réaction suivante :

$$UC_2+2C_L+10/3O_2 \rightarrow 1/3U_3O_8+2C_L+2CO_2 \quad \Delta m_{théorique}=7,2\%$$

Pour une température $T_{oxydation}$ de 500°C, le profil de variation de masse au cours de l'oxydation de l'UCx fait apparaître une prise suivie d'une perte de masse temporaire qui tend ensuite vers un palier stabilisé $\Delta m$. La prise de masse correspond à l'oxydation de la phase $UC_2$ en $U_3O_8$ et la perte de masse traduit l'oxydation du carbone résiduel issu de l'$UC_2$ présent en faible quantité s'accompagnant d'un faible dégagement de $CO_2$. A la fin du palier d'oxydation, les phases chimiques restantes sont $U_3O_8$ et $C_L$ de sorte que la réaction d'oxydation globale peut s'écrire sous la forme :

$$UC_2+2C_L+(10/3+\alpha)O_2 \rightarrow 1/3U_3O_8+(2-\alpha)C_L+(2+\alpha)CO_2 \quad \Delta m_{théorique}=<7\%$$

Pour des températures supérieures ou égales à 600°C, les profils de variations de masses font apparaître simultanément une augmentation suivie d'une perte de masse progressive dont l'amplitude est proportionnelle à la température d'oxydation appliquée. Les profils $\Delta m$ passent ainsi par un maximum appelé également « overshoot » dont l'amplitude et la position pour un même matériau varient en fonction de la température d'oxydation appliquée. A partir de ce point, un fort dégagement de $CO_2$ accompagne cette perte de masse mettant en évidence l'oxydation de l'ensemble du graphite excédentaire en plus de l'oxydation de l'UCx sous forme $U_3O_8$. La vitesse d'oxydation des 2 phases ($UC_2$ et $C_L$) constituant le matériau UCx dépend donc fortement de la température d'oxydation $T_{oxydation}$ appliquée.

Cette détermination des cinétiques d'oxydation du matériau UCx et de l'influence de la température choisie en condition isotherme permet ainsi d'identifier une gamme de températures optimales autour de 400°C +/- 100°C pour l'application du procédé de la présente invention. Ces températures permettent de s'assurer de l'oxydation complète de la phase $UC_2$ et ce, tout à la fois :

- sans oxyder totalement le carbone résiduel (soit issu de l'oxydation de l'UCx ($C_{UCx}$) soit présent initialement ($C_L$)) contenu dans les cibles ;
- sans nécessiter une durée de traitement rédhibitoire au niveau procédé : les thermogrammes présentés sur la figure 4 montrent que la stabilisation finale du matériau UCx (c'est-à-dire une variation de masse qui n'évolue plus au cours de l'oxydation) à une température $T_{oxydation}$=400°C est quatre fois plus rapide que pour une température d'oxydation de 700°C tout en évitant l'oxydation du graphite résiduel ;
- sans surchauffe excessive de la charge à stabiliser afin d'éviter tout emballement ainsi qu'une oxydation d'autres éléments ne le nécessitant pas et pouvant même être pénalisant pour le traitement des gaz.

A titre d'exemple, la figure 5 met en évidence les variations de dégagement de $CO_2$ ($C_{5a\ 400°C}$ et $C_{5a\ 700°C}$) et de surchauffes correspondant à des sur-températures locales ($C_{5b\ 400°C}$ et $C_{5b\ 700°C}$) détectées localement lors de l'application du procédé. Les données obtenues montrent notamment des phénomènes de reprise de réactivité tout particulièrement avec une température de 700°C (identifiées en figure 5 par la Zone A et la Zone B) qui témoignent de l'exothermicité des réactions mises en jeu. Par ailleurs, toujours à cette température d'oxydation de 700°C, le dégagement encore présent de $CO_2$ après 280 minutes de traitement d'oxydation montre que le procédé de stabilisation reste encore inachevé. En revanche, pour des températures plus modérées voisines de 400°C, le dégagement de $CO_2$ devient inférieur à la valeur seuil (100ppm) après seulement 200 mn de traitement d'oxydation ce qui signifie la conversion de la quasi-totalité du matériau UCx en UOx. De même, les phénomènes de reprise de réactivité thermique à ces températures « douces » sont beaucoup plus faibles voire inexistantes.

Les réactions ayant lieu lors du procédé sont schématiquement les suivantes (avec une priorité sur la réaction (1)) :

$$UC_x+yCL+(x+4/)3O_2 \rightarrow 1/3U_3O_8+yC_L+xCO_2 \quad x=1\ à\ 2,\ y=1\ à\ n \qquad (1)$$

$$UC_x+yC_L+4/3O_2 \rightarrow 1/3U_3O_8+xC_{UCx}+yC_L \quad x=1\ à\ 2,\ y=1\ à\ n \qquad (2)$$

$$UC_x+yC_L+(x+z/2)O_2 \rightarrow 1UO_z+yC_L+xCO_2 \quad x=1\ à\ 2,\ y=1\ à\ n,\ z=2\ à\ 3 \qquad (3)$$

A contrario, les réactions indésirables pour le matériau UCx sont celles qui mettent en jeu l'oxydation du carbone en même temps que l'oxydation de la phase $UC_2$ et plus particulièrement le carbone libre noté $C_L$ présent sous forme graphitique en quantités importantes dans le matériau UCx initial (70% en volume). A titre d'exemple, quelques réactions indésirables sont présentées ci-dessous qui ne mettent plus en évidence la présence de carbone $C_L$ et/ou $C_{UCx}$ dans le produit de la réaction d'oxydation.

$$UC_x+yC_L+(4/3+x+y)O_2 \rightarrow 1/3U_3O_8+(x+y)CO_2 \quad x=1\ à\ 2,\ y=1\ à\ n \qquad (4)$$

$$UC_x+yC_L+(z/2+x+y)O_2 \rightarrow 1UO_z+(x+y)CO_2 \quad x=1\ à\ 2,\ y=1\ à\ n,\ z=2\ à\ 3 \qquad (5)$$

Optimisation de la pression partielle oxydante et de la chaleur dégagée :

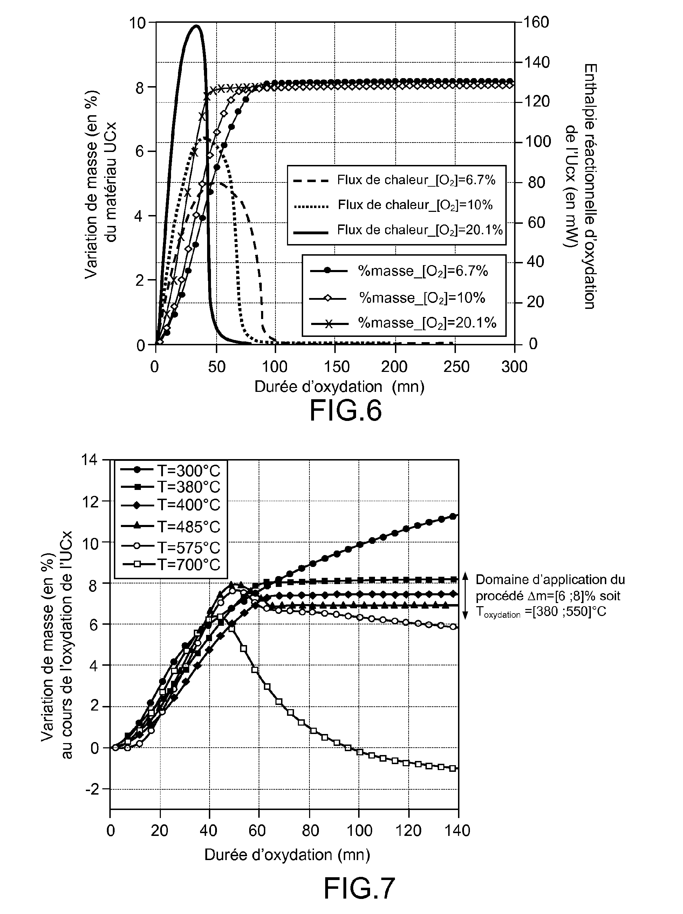

Le Demandeur a également mis en évidence que la pression partielle oxydante et la chaleur dégagée en fonction du temps pouvaient être optimisées. Pour cela, l'effet de la pression partielle d'$O_2$ a été étudié sur le comportement à l'oxydation de l'UCx. Un exemple précis est illustré en figure 6 qui représente la variation de masse en % (traits pleins) et le flux de chaleur dégagé (traits pointillés) au cours de l'oxydation en régime isotherme de l'UCx pour une température d'application du procédé de 400°C à 3 concentrations partielles [$O_2$] différentes ([$O_2$]=6,7-10-21%).

Les résultats obtenus montrent que la pression partielle d'$O_2$ n'influence pas le domaine d'application du procédé : les variations de gains massiques sont identiques et se stabilisent autour d'une valeur finale moyenne $\Delta m$=+8% quelle que soit la pression partielle d'$O_2$ appliquée. Il en résulte que seule la phase $UC_2$ est oxydée sous la forme oxyde de type $U_3O_8$. Le graphite excédentaire $C_L$, quant à lui, est toujours présent dans le matériau oxydé limitant ainsi la génération de dioxyde de carbone $CO_2$ pénalisant pour la gestion post-traitement des gaz du procédé.

La pression partielle joue simplement un rôle dans la cinétique d'oxydation de l'UCx et par conséquent pour le temps de traitement du procédé: à forte concentration ([$O_2$]=20,1%), cette pression partielle d'$O_2$ permet de stabiliser

la phase UC$_2$ de l'UCx seulement après 40 mn d'application du procédé alors qu'à faible concentration ([O$_2$]=10%), la stabilisation de l'UCx atteint la valeur seuil $\Delta$m=+8% après 70 mn.

La pression partielle d'O$_2$ joue également un rôle dans les valeurs mesurées de flux de chaleur, grandeurs qui sont caractéristiques de l'exothermicité dégagée au cours de la réaction d'oxydation de l'UCx en U$_3$O$_8$ ; la quantité maximale de chaleur dégagée est deux fois plus conséquente lorsque le procédé de stabilisation de l'UCx est réalisé avec une concentration partielle d'O$_2$ variant de 6,7 à 21%. Cette quantité de chaleur instantanée dégagée pouvant impacter négativement le procédé dans le cas ou l'augmentation de la sur-température locale pourrait entrainer une augmentation de la température globale d'oxydation supérieure notamment à la valeur T$_{MAX}$ (définit comme étant la température de début d'oxydation du carbone excédentaire), il est primordial d'établir des conditions expérimentales optimales qui permettent de définir un compromis entre vitesse de conversion et maîtrise de dégagement de chaleur pouvant induire une modification de la réactivité.

Par conséquent, une concentration partielle d'O$_2$ voisine de 10% permet ainsi d'optimiser le temps de conversion de l'UCx sous forme oxyde tout en limitant l'exothermicité dégagée liée à cette réaction d'oxydation.

Optimisation de la température du traitement thermique de stabilisation :

Les gains massiques obtenus à des températures d'oxydation variant de 380 à 550°C et la stabilisation de ces grandeurs autour d'une valeur seuil $\Delta$m=[6 ; 8]% définissent la robustesse du procédé vis-à-vis de la température d'application de traitement du procédé en permettant la conversion unique et contrôlée de la phase UC$_2$ du matériau UCx sous forme oxyde de type U$_3$O$_8$ (avec des traces possibles UO$_2$).

La figure 7 présente un réseau d'isotherme obtenu autour d'une température optimale d'application du procédé de 400°C. Les profils obtenus (réalisés dans des conditions isothermes similaires de ceux obtenus sur la figure 3) permettent de tester la robustesse du procédé en déterminant la température maximale qui aboutirait à l'oxydation du carbone excédentaire sur les thermogrammes présentés.

Il est à noter que les thermogrammes obtenus à partir de températures d'oxydation supérieures à 550°C (2 thermogrammes obtenus à T$_{oxydation}$=575°C puis 700°C représentés pour exemple sur la figure 7) mettent en évidence une perte de masse de plus en plus forte et de moins en moins linéaire : ils soulignent l'oxydation progressive du carbone excédentaire C$_L$ qui devient de plus en plus prononcée en fonction de l'augmentation de température d'oxydation.

Optimisation du procédé de l'invention par ajout de la vapeur d'eau :

Le Demandeur a également étudié l'ajout de vapeur d'H$_2$O avant et pendant le cycle isotherme du traitement du procédé et a pu mettre en évidence les conclusions suivantes :

- un effet de la vapeur d'H$_2$O sur la vitesse de conversion du matériau UCx en UOx sous atmosphère oxydante, quel que soit le moment de l'ajout de vapeur d'H$_2$O (avant ou pendant le traitement d'oxydation) ;
- la possibilité d'utiliser un nouveau traceur gazeux H$_2$ lié à la réaction entre l'UCx et l'H$_2$O selon la réaction :

$$UC_2 + yC_L + xH_2O \rightarrow UOx + xH_2 + yC_L \qquad (6)$$

La présence de H$_2$, mesuré en concentration avec un facteur supérieur à 100 fois plus faibles que le CO$_2$ dégagé au cours de l'oxydation de l'UCx, peut être utilisée au même titre que ce dernier, comme élément de critère d'arrêt du bon déroulement du procédé. Ce critère étant atteint lorsque le dégagement H$_2$ est inférieur à une valeur minimale seuil ;
- l'accélération de la fragmentation chimique de matériaux très denses et de la vitesse d'oxydation de l'UCx sous forme oxyde (par exemple, un gain en temps de 10 mn a été mesuré au cours d'un traitement d'oxydation en condition isotherme effectué à 420°C) ;
- l'abaissement de la quantité de chaleur dégagée et par conséquent la sur-température $\Delta$T observée au cours du procédé et notamment au début de la réaction d'oxydation exothermique de l'UCx en U$_3$O$_8$ (diminution $\Delta$T de 8% en présence de vapeur d'H$_2$O).

Le Demandeur a également étudié l'effet de vapeur d'H$_2$O sur la stabilisation de l'UCx par microscopie électronique environnementale à balayage. Les résultats d'oxydation *in-situ* sous microscopie électronique environnementale à différentes températures d'oxydation et pressions partielles de vapeur d'H$_2$O ont permis de mettre en évidence l'apparition de fissures localisées à la surface de l'UCx. Ces fissures facilitent l'interaction entre des molécules d'O$_2$ et des amas d'UC$_2$ peu accessibles car présents en volume au sein du matériau UCx. Ces fissures permettent aux molécules

d'O$_2$ d'accéder plus facilement en volume et d'améliorer ainsi grandement la vitesse de conversion globale de l'UC$_2$ en phase oxyde. Des mesures post-mortem par diffractions aux rayons X sur des essais d'oxydations d'UCx sous microscopie environnementale à différentes pressions partielles P(H$_2$O) de vapeur d'H$_2$O ont révélé la présence d'UO$_2$, d'U$_3$O$_8$ et de carbone excédentaire dans le matériau oxydé.

L'utilisation d'une combinaison de réactif O$_2$/H$_2$O dans le traitement du procédé permet également d'engager deux types de réaction (corrosion et oxydation) avec changement de volume molaire des produits issus de l'oxydation de la phase UC$_2$ (UO$_2$ et U$_3$O$_8$ entre eux). La présence de ces deux oxydes favorise le changement de volume du produit oxydé et l'apparition de contraintes interstitielles qui entrainent l'apparition de fissures permettant une meilleure accessibilité de l'O$_2$ au contact de surfaces non oxydées et une amélioration significative de la cinétique de traitement.

L'ajout de vapeur d'H$_2$O pour le procédé est d'autant plus pertinent sur des matériaux initiaux massiques et denses dont le coeur du matériau est difficilement accessible pour le dioxygène. Elle a donc une influence sur la morphologie du matériau initial à stabiliser.

<u>Validation du procédé de l'invention pour différents types de morphologie du composé de carbure d'uranium :</u>

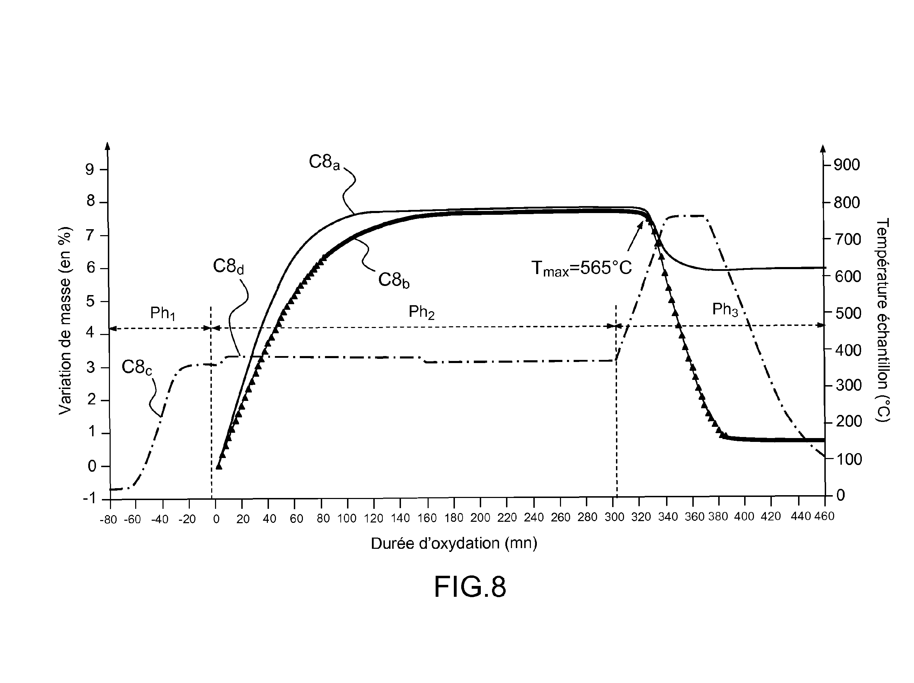

La stabilisation des cibles UCx a été menée à une température de stabilisation de 400°C en utilisant deux formes géométriques différentes : de la poudre UCx (granulométrie de 150 μm) et un assemblage de plusieurs pastilles UCx collées les unes aux autres (pastilles Φ=15mm, e=1mm, densité hydrostatique = 8, porosité >50%). La programmation du cycle d'oxydation isotherme et l'évolution massique de ces deux formes géométriques UCx au cours du traitement d'oxydation sont représentées sur la figure 8. Plus précisément la courbe C$_{8a}$ est relative à la variation de masse dans le cas de pastilles, la courbe C$_{8b}$ est relative à la variation massique dans le cas de poudre, la courbe C$_{8c}$ est relative à l'évolution de la température avec des pastilles, la courbe C$_{8d}$ étant relative à l'évolution de la température avec de la poudre.

Au cours de ces essais, un cycle d'oxydation en régime anisotherme (montée à T$_{oxydation}$=800°C avec rampe de 10°C/mn) a également été programmé après 300 mn d'application du procédé afin de :

- déterminer la température maximale T$_{max}$ correspondant au démarrage de l'oxydation du carbone excédentaire du matériau UCx ;
- d'analyser les différences de perte de masse du carbone excédentaire en fonction de la nature morphologique du matériau initial.

Les résultats obtenus montrent ainsi que le procédé de la présente invention est :

- applicable pour des matériaux UCx variables de type poudres ou pastilles car le gain massique du matériau UCx (forme ou poudre) pendant oxydation tend vers un palier égal à Δm=7,6% en conformité avec l'obtention d'un produit final stabilisé défini par U$_3$O$_8$+C$_L$ et confirmé par diffraction des rayons X « DRX » ;
- optimal pour un matériau UCx initial de géométrie « pastilles » car la cinétique réactionnelle liée à la réaction d'oxydation de l'UCx en U$_3$O$_8$ est plus rapide (palier Δm atteint plus tôt) et moins exothermique que dans le cas d'une géométrie type « poudre » (palier Δm atteint plus rapidement et sur-température locale ΔT d'amplitude plus faible et moins longue) ;
- modulable vis-à-vis de la température de traitement du procédé quelle que soit la nature géométrique de l'UCx. En effet, pour les deux cas de figures, la température T$_{max}$ correspondant au démarrage de l'oxydation du carbone excédentaire est identique et mesurée comme étant égale à 565°C. L'expérience montre donc qu'un écart maximal ΔT=T$_{max}$-T$_{oxydation}$ est applicable pour tester en fin de réaction le bon déroulement du procédé de stabilisation de l'UCx sous forme UOx. Le procédé est également modulable dans les deux cas de figures car le gain de masse est identique au cours du traitement d'oxydation en condition isotherme.

Les différences enregistrées de perte de masse lors de l'oxydation du carbone excédentaire montrent, qu'au-delà d'une température T$_{max}$, l'application du procédé ne permet pas d'oxyder totalement le carbone excédentaire C$_L$ contenu dans le matériau UCx initial, en particulier si ce dernier a une géométrie de type « pastille ». Néanmoins, sur la base d'éléments de comparaison strictement géométriques, si la température d'application du procédé doit être supérieure à la température T$_{max}$ (en particulier pour le test de fin de réaction), l'utilisation d'un matériau UCx type « pastilles » au détriment d'une géométrie type « poudre », apparait bénéfique dans le sens ou l'oxydation du carbone excédentaire n'est que partielle, limitant ainsi la production de quantités non négligeables CO/CO$_2$ à gérer après application du procédé.

Exemple de conditions opératoires pour le procédé de stabilisation selon l'invention :

Le matériau initial UCx, sous forme de poudre ou de pastilles centimétriques, est introduit à l'intérieur d'une nacelle, elle-même placée à l'intérieur d'un four oxydant.

Un gaz neutre d'argon par exemple est alors introduit dans le four et un cycle de chauffe de 10°C/mn est imposé jusqu'à l'obtention d'une température de consigne notée $T_{oxydation}$ voisine de 400°C.

Une fois cette température $T_{oxydation}$ atteinte, un palier de stabilisation de 30 mn sous Argon est programmé.

Après ce palier de stabilisation, de l'air reconstitué seul ou dilué dans de l'argon à hauteur de 10% $O_2$ est subitement introduit dans le dispositif de mesure avec un débit volumique de gaz proportionnel à la quantité d'UCx initiale.

L'oxydation de l'UCx en condition isotherme à une température de stabilisation $T_{oxydation}$=400°C démarre alors pendant une durée moyenne de 5h et un système d'analyse de gaz permet de suivre en temps réel tout particulièrement la consommation d'$O_2$ et le dégagement de $CO_2$ produit lors de l'oxydation de l'UCx en $U_3O_8$.

Lorsque la concentration d'$O_2$ atteint la consigne imposée en entrée du procédé (de préférence 10% en teneur volumique) et que la concentration de $CO_2$ indique une valeur inférieure à 100 ppm, un test de vérification de reprise de réactivité est réalisé. Ce test consiste, par exemple, à augmenter rapidement mais de façon contrôlée la température typiquement de $\Delta T$=+50°C au dessus de la consigne et mesurer l'évolution de l'$O_2$ et du $CO_2$ au cours de ce changement de température. Une variation de pression et/ou insertion d'une pression partielle de vapeur d'$H_2O$ peuvent être également envisagées comme critères/tests de sollicitations.

En l'absence de dégagement de $CO_2$ supérieure à une valeur seuil (100 ppm) et/ou consommation d'$O_2$ au cours de ce test, un refroidissement du four est programmé sous air (refroidissement de plusieurs dizaines de °C/mn).

En présence de dégagement de $CO_2$ et/ou consommation d'$O_2$ au cours de ce test de fin de réaction, la stabilisation de l'UCx a une nouvelle température $T_{oxydation}$+ $\Delta T$ est poursuivie tant que les quantités de $CO_2$ ne sont pas inférieures à la valeur seuil (100 ppm). Un ajout de vapeur d'$H_2O$ à l'atmosphère oxydante peut être envisagé pour accélérer sensiblement la stabilisation complète de l'UCx sous forme UOx. La présence de vapeur d'$H_2O$ permettra également de suivre un nouveau traceur : l'$H_2$ qui apparait lors de l'oxydation résiduelle d'UCx sous forme oxyde. Ces tests en températures sont effectués tant que la température globale imposée ne dépasse pas une valeur maximale correspondant à l'oxydation du carbone excédentaire présent dans le matériau UCx ($T_{max}$ voisin de 560°C). En l'absence de nouveaux dégagements gazeux, le four est refroidi dans des conditions similaires à celles établies en cas de réponse négative au test de fin de réaction.

Le résidu oxydé, de composition $U_3O_8$+$C_{Libre}$ et à l'état final de poudre, est ensuite collecté et conditionné selon les normes de l'exutoire envisagé. Un prélèvement pour analyse par diffraction aux rayons X « DRX » est également effectué.

**Revendications**

1. Procédé de stabilisation chimique d'un composé de carbure d'uranium répondant à la formule :

    UCx + yC avec x $\geq$ 1 et y>0, x et y étant des nombres réels, placé dans une enceinte de stabilisation **caractérisé en ce qu'**il comprend les étapes suivantes :

    - une étape de montée en température de la température interne de ladite enceinte à une température dite d'oxydation dudit composé à base de carbure d'uranium comprise entre environ 380°C et 550°C, ladite enceinte étant alimentée par un gaz inerte ;
    - une étape de traitement d'oxydation isotherme à ladite température d'oxydation, ladite enceinte étant placée sous pression partielle d'$O_2$ ;
    - une étape de contrôle de l'achèvement de la stabilisation dudit composé comprenant le suivi de la quantité de dioxygène consommé et/ou de dioxyde de carbone dégagé ou de dioxyde de carbone et de monoxyde de carbone dégagés, jusqu'à au moins l'atteinte d'une valeur d'une consigne d'entrée pour le dioxygène, d'une valeur minimale seuil pour ladite quantité de dioxyde de carbone ou de valeurs seuil pour le dioxyde de carbone et le monoxyde de carbone.

2. Procédé de stabilisation chimique d'un composé de carbure d'uranium selon la revendication 1, **caractérisé en ce que** l'étape de contrôle de l'achèvement de la stabilisation comporte en outre le suivi de variation de masse des composés solides à base de carbone et d'uranium dans l'enceinte, une augmentation de masse étant corrélée à l'oxydation de carbure d'uranium en cours.

3. Procédé de stabilisation chimique d'un composé de carbure d'uranium selon la revendication 1, **caractérisé en ce**

que l'étape de contrôle de l'achèvement de la stabilisation est effectuée par l'application d'une montée en température de la température interne de ladite enceinte comprise entre ladite température d'oxydation et la température d'oxydation du carbone (cette température étant exclue de l'intervalle) et suivi de la présence de $CO_2$ dégagé.

4. Procédé de stabilisation chimique d'un composé de carbure d'uranium selon l'une des revendications 1 ou 2, **caractérisé en ce qu'**il comprend l'introduction d'une pression partielle en vapeur $H_2O$ dans ladite enceinte avant et/ou pendant et/ou après l'étape d'oxydation.

5. Procédé de stabilisation chimique d'un composé de carbure d'uranium selon la revendication 4, **caractérisé en ce que** l'étape de contrôle et d'achèvement de la stabilisation comprend la détection de $H_2$ comme marqueur de suivi de fin d'oxydation dans ladite enceinte.

6. Procédé de stabilisation chimique d'un composé de carbure d'uranium selon l'une des revendications 1 à 5, **caractérisé en ce que** l'étape de contrôle de l'achèvement de la stabilisation comprend une opération de mise en surpression des gaz de réaction présents dans ladite enceinte de manière à accélérer la fin de la réaction d'oxydation dudit composé.

7. Procédé de stabilisation chimique d'un composé de carbure d'uranium selon la revendication 6, **caractérisé en ce que** l'étape de contrôle de l'achèvement de la stabilisation comprend en outre un cycle d'opération de mise en surpression et d'opération de mise en sous-pression des gaz de réaction présents dans ladite enceinte.

8. Procédé de stabilisation chimique d'un composé de carbure d'uranium selon l'une des revendications 1 à 7, dans lequel ledit composé présente une morphologie de type poudre ou de type pastille poreuse ou dense.

9. Procédé de stabilisation chimique d'un composé de carbure d'uranium selon l'une des revendications 1 à 8, **caractérisé en ce qu'**il comprend une étape préliminaire de détermination d'une température optimale d'oxydation par analyse thermogravimétrique d'un échantillon de composé UCx+yC.

10. Procédé de stabilisation chimique d'un composé de carbure d'uranium selon la revendication 9, **caractérisé en ce que** la température optimale d'oxydation variant en fonction du conditionnement dudit carbure d'uranium est comprise entre environ 380°C et 550°C.

11. Dispositif de stabilisation chimique d'un composé de carbure d'uranium comprenant une enceinte comprenant un four d'oxydation ($B_3$) , le dispositif étant adapté spécialement afin de mettre en oeuvre le procédé selon l'une des revendications 1 à 10, **caractérisé en ce qu'**il comprend :

- un module d'alimentation en gaz ($B_1$) permettant de générer des atmosphères neutres d'argon ou d'azote ou bien partiellement oxydantes en $O_2$ et/ou $H_2O$ à l'aide d'un circuit d'alimentation externe en transmettant des flux de gaz audit four d'oxydation ;
- un module d'alimentation électrique ($B_2$) alimentant le four d'oxydation en lui transmettant un flux de consigne de température ;
- ladite enceinte transmettant un flux de gaz sortants à un module de régulation et d'asservissement ($B_4$) ;
- ledit module de régulation et d'asservissement comprenant un premier module de mesure de température et de puissance thermique ($B_{41}$) et un second module d'analyse des différentes quantité de gaz ($B_{42}$) présents dans le four d'oxydation, transmettant un flux de consigne auxdits moyens d'alimentation en gaz et auxdits moyens d'alimentation électrique.

12. Dispositif de stabilisation chimique d'un composé de carbure d'uranium selon la revendication 11, **caractérisé en ce que** le module d'alimentation en gaz ($B_1$) comprend un circuit générateur de vapeur d'eau ($B_{11}$), couplé à un régulateur de pression de vapeur d'eau ($B_{14}$), une alimentation en Argon/Azote ($B_{12}$), une alimentation en Argon/Dioxygène ($B_{13}$), couplée à un régulateur de pression de dioxygène ($B_{15}$).

13. Dispositif de stabilisation chimique d'un composé de carbure d'uranium selon l'une des revendications 11 ou 12, **caractérisé en ce que** ladite enceinte est équipée de moyens de pesée des composés solides à base de carbone et d'uranium.

**Patentansprüche**

1. Verfahren zur chemischen Stabilisierung einer Urankarbidverbindung entsprechend der Formel:

   $UCx + yC$ mit $x \geq 1$ und $y > 0$, wobei x und y reelle Zahlen sind, platziert in einer Stabilisierungskammer, **dadurch gekennzeichnet, dass** es die folgenden Schritte umfasst:

   - einen Schritt zur Temperaturerhöhung der Innentemperatur der Kammer auf eine sogenannte Oxidationstemperatur der Verbindung auf Urankarbidbasis, die zwischen etwa 380 °C und 550 °C liegt, wobei die Kammer mit einem inerten Gas versorgt wird;
   - einen Schritt zur isothermen Oxidationsbehandlung bei der Oxidationstemperatur, wobei die Kammer unter $O_2$-Teildruck gesetzt wird;
   - einen Schritt zur Steuerung des Abschlusses der Stabilisierung der Verbindung, umfassend die Überwachung der Menge verbrauchten Dioxids und/oder abgegebenen Kohlendioxids oder abgegebenen Kohlendioxids und Kohlenmonoxids, zumindest bis zum Erreichen von einem Einlasssollwert für das Dioxid, einem Mindestschwellenwert für die Kohlendioxidmenge oder Schwellenwerten für das Kohlendioxid und das Kohlenmonoxid.

2. Verfahren zur chemischen Stabilisierung einer Urankarbidverbindung nach Anspruch 1, **dadurch gekennzeichnet, dass** der Schritt zur Steuerung des Abschlusses der Stabilisierung weiterhin die Überwachung einer Variation der Masse der festen Verbindungen auf Kohlenstoff- und Uranbasis in der Kammer umfasst, wobei eine Massenzunahme mit der ablaufenden Urankarbidoxidation korreliert ist.

3. Verfahren zur chemischen Stabilisierung einer Urankarbidverbindung nach Anspruch 1, **dadurch gekennzeichnet, dass** der Schritt zur Steuerung des Abschlusses der Stabilisierung durchgeführt wird durch die Anwendung einer Temperaturerhöhung der Innentemperatur der Kammer, die zwischen der Oxidationstemperatur und der Oxidationstemperatur des Kohlenstoffs liegt (wobei diese Temperatur vom Intervall ausgeschlossen ist) und Überwachung des Vorhandenseins von abgegebenem $CO_2$.

4. Verfahren zur chemischen Stabilisierung einer Urankarbidverbindung nach einem der Ansprüche 1 oder 2, **dadurch gekennzeichnet, dass** es die Einbringung eines $H_2O$-Dampf-Teildrucks in die Kammer vor und/oder während und/oder nach dem Oxidationsschritt umfasst.

5. Verfahren zur chemischen Stabilisierung einer Urankarbidverbindung nach Anspruch 4, **dadurch gekennzeichnet, dass** der Schritt zur Steuerung des Abschlusses der Stabilisierung den Nachweis von $H_2$ als Oxidationsendeüberwachungsmarker in der Kammer umfasst.

6. Verfahren zur chemischen Stabilisierung einer Urankarbidverbindung nach einem der Ansprüche 1 bis 5, **dadurch gekennzeichnet, dass** der Schritt zur Steuerung des Abschlusses der Stabilisierung einen Vorgang zur Überdruckbeaufschlagung der Reaktionsgase, die in der Kammer vorhanden sind, umfasst, um das Ende der Reaktion zur Oxidation der Verbindung zu beschleunigen.

7. Verfahren zur chemischen Stabilisierung einer Urankarbidverbindung nach Anspruch 6, **dadurch gekennzeichnet, dass** der Schritt zur Steuerung des Abschlusses der Stabilisierung weiterhin einen Zyklusvorgang zur Überdruckbeaufschlagung und einem Zyklusvorgang zur Unterdruckbeaufschlagung der Reaktionsgase umfasst, die in der Kammer vorhanden sind.

8. Verfahren zur chemischen Stabilisierung einer Urankarbidverbindung nach einem der Ansprüche 1 bis 7, wobei die Verbindung eine Morphologie vom Typ Pulver oder vom Typ poröses oder dichtes Pellet aufweist.

9. Verfahren zur chemischen Stabilisierung einer Urankarbidverbindung nach einem der Ansprüche 1 bis 8, **dadurch gekennzeichnet, dass** es einen vorausgehenden Schritt zur Bestimmung einer optimalen Oxidationstemperatur durch thermogravimetrische Analyse einer Probe von Verbindung $UCx + yC$ umfasst.

10. Verfahren zur chemischen Stabilisierung einer Urankarbidverbindung nach Anspruch 9, **dadurch gekennzeichnet, dass** die optimale Oxidationstemperatur, die in Abhängigkeit von der Konditionierung des Urankarbids variiert, zwischen etwa 380 °C und 550 °C liegt.

**EP 2 737 494 B1**

11. Vorrichtung zur chemischen Stabilisierung einer Urankarbidverbindung, umfassend eine Kammer, umfassend einen Oxidationsofen ($B_3$), wobei die Vorrichtung insbesondere dazu ausgelegt ist, das Verfahren nach einem der Ansprüche 1 bis 10 auszuführen, **dadurch gekennzeichnet, dass** sie umfasst:

- ein Modul ($B_1$) zur Versorgung mit Gas, das ermöglicht, neutrale Argon- oder Stickstoffatmosphären oder teilweise oxidierende $O_2$- und/oder $H_2O$-Atmosphären mit Hilfe eines externen Versorgungskreises zu erzeugen, wobei Gasströme dem Oxidationsofen zugeleitet werden;
- ein Modul ($B_2$) zur elektrischen Versorgung, das den Oxidationsofen versorgt, wobei es ihm einen Temperatursollfluss zuleitet;
- wobei die Kammer einen austretenden Gasstrom einem Modul ($B_4$) zur Regulierung und Regelung zuleitet;
- wobei das Modul zur Regulierung und Regelung ein erstes Modul ($B_{41}$) zur Messung von Temperatur und thermischer Leistung und ein zweites Modul ($B_{42}$) zur Analyse der diversen Mengen von Gasen umfasst, die im Oxidationsofen vorhanden sind, wobei es den Mitteln zur Versorgung mit Gas und den Mitteln zur elektrischen Versorgung einen Sollfluss zuleitet.

12. Vorrichtung zur chemischen Stabilisierung einer Urankarbidverbindung nach Anspruch 11, **dadurch gekennzeichnet, dass** das Modul ($B_1$) zur Versorgung mit Gas einen Wasserdampferzeugerkreis ($B_{11}$), gekoppelt an einen Wasserdampfdruckregler ($B_{14}$), eine Versorgung ($B_{12}$) mit Argon/Stickstoff, eine Versorgung ($B_{13}$) mit Argon/Dioxid, gekoppelt an einen Dioxiddruckregler ($B_{15}$), umfasst.

13. Vorrichtung zur chemischen Stabilisierung einer Urankarbidverbindung nach einem der Ansprüche 11 oder 12, **dadurch gekennzeichnet, dass** die Kammer mit Mitteln zum Wiegen der festen Verbindungen auf Kohlenstoff- und Uranbasis ausgestattet ist.

**Claims**

1. Method for chemical stabilisation of a compound of uranium carbide, corresponding to the formula:

UCx + yC with x ≥ 1 and y > 0, x and y being real numbers, placed in a stabilisation chamber, **characterised in that** it comprises the following steps:

- a step of raising the temperature of the inner temperature of the chamber to a temperature which is called the oxidation temperature of the compound based on uranium carbide of between 380°C and 550°C, the chamber being supplied with an inert gas;
- a step of isothermic oxidation processing at the oxidation temperature, the chamber being placed under partial pressure of $O_2$;
- a step of controlling the completion of the stabilisation of the compound comprising monitoring the quantity of dioxygen consumed and/or carbon dioxide released or carbon dioxide and carbon monoxide released until at least a value of an input set point for the dioxygen, a minimum threshold value for the quantity of carbon dioxide or threshold values for the carbon dioxide and the carbon monoxide has been reached.

2. Method for chemical stabilisation of a compound of uranium carbide according to claim 1, **characterised in that** the step of controlling the completion of the stabilisation further comprises monitoring the variation of mass of the solid compounds based on carbon and uranium in the chamber, an increase of mass being correlated with the oxidation of uranium carbide in progress.

3. Method for chemical stabilisation of a compound of uranium carbide according to claim 1, **characterised in that** the step of controlling the completion of the stabilisation is carried out by application of an increase in temperature of the inner temperature of the chamber between the oxidation temperature and the oxidation temperature of the carbon (this temperature being excluded from the range) and monitoring the presence of $CO_2$ released.

4. Method for chemical stabilisation of a compound of uranium carbide according to either claim 1 or claim 2, **characterised in that** it comprises the introduction of a partial pressure of $H_2O$ vapour in the chamber before and/or during and/or after the oxidation step.

5. Method for chemical stabilisation of a compound of uranium carbide according to claim 4, **characterised in that** the step of controlling the completion of the stabilisation comprises the detection of $H_2$ as a marker for monitoring

**17**

the end of oxidation in the chamber.

6.  Method for chemical stabilisation of a compound of uranium carbide according to any one of claims 1 to 5, **characterised in that** the step of controlling the completion of the stabilisation comprises an operation of placing the reaction gases present in the chamber in a state of excess pressure in order to accelerate the end of the oxidation reaction of the compound.

7.  Method for chemical stabilisation of a compound of uranium carbide according to claim 6, **characterised in that** the step of controlling the completion of the stabilisation further comprises an operation cycle for placing the reaction gases present in the chamber in a state of excess pressure and an operation cycle for placing the reaction gases present in the chamber in a state of reduced pressure.

8.  Method for chemical stabilisation of a compound of uranium carbide according to any one of claims 1 to 7, wherein the compound has a morphology of the powder or porous or dense pellet type.

9.  Method for chemical stabilisation of a compound of uranium carbide according to any one of claims 1 to 8, **characterised in that** it comprises a preliminary step of determining an optimum oxidation temperature by means of thermogravimetric analysis of a sample of compound $UCx+yC$.

10. Method for chemical stabilisation of a compound of uranium carbide according to claim 9, **characterised in that** the optimum oxidation temperature which varies in accordance with the processing of the uranium carbide is between approximately 380°C and 550°C.

11. Device for chemical stabilisation of a compound of uranium carbide comprising a chamber which comprises an oxidation oven ($B_3$), the device being specially adapted in order to implement the method according to any one of claims 1 to 10, **characterised in that** it comprises:

    - a gas supply module ($B_1$) which allows neutral atmospheres of argon or nitrogen to be generated or partially oxidising atmospheres with $O_2$ and/or $H_2O$ using an external supply circuit by transmitting flows of gas to the oxidation oven;
    - an electrical power supply module ($B_2$) which supplies the oxidation oven by transmitting to it a temperature set point flow;
    - the chamber transmitting a flow of discharged gases to a regulation and slave module (B4);
    - the regulation and slave module comprising a first module for measuring temperature and thermal power ($B_{41}$) and a second module for analysing different quantities of gas ($B_{42}$) present in the oxidation oven, transmitting a set point flow to the gas supply means and to the electrical power supply means.

12. Device for chemical stabilisation of a compound of uranium carbide according to claim 11, **characterised in that** the gas supply module ($B_1$) comprises a water vapour generator circuit ($B_{11}$) which is coupled to a water vapour pressure regulator ($B_{14}$), a supply of argon/nitrogen ($B_{12}$), a supply of argon/dioxygen ($B_{13}$) coupled to a dioxygen pressure regulator ($B_{15}$).

13. Device for chemical stabilisation of a compound of uranium carbide according to either claim 11 or claim 12, **characterised in that** the chamber is provided with means for weighing solid compounds based on carbon and uranium.

FIG.1

FIG.2

FIG.3

FIG.4

FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004012206 A

**Littérature non-brevet citée dans la description**

- **YVES ADDA.** Etude cinétique de l'oxydation de la nitruration et de l'hydruration de l'uranium. *Rapport CEA n°757,* 1958
- **PEAKALL, K.A. ; ANTILL J.E.** Oxydation of Uranium Monocarbide. *J. Less-Common Metals,* 1961, vol. 4, 426-435
- **MURBACH et al.** Pyrochemical reprocessing of uranium carbide. *Summary Report. Atomics international,* 1965, 38
- **BRADLEY, M.** Hydrolysis of Uranium Carbides between 25 and 100°C. *Il Uranium Dicarbide, Uranium metal Monocarbide Mixtures and Uranium Monocarbides- Dicarbide Mixtures. Inorganic Chemistry,* 1964, vol. 3, 189-195
- **HERRMANN, B. ; HERRMANN. F.J.** Cinétique d'oxydation du mono carbure d'uranium par l'oxygène sec ou humide. *Rapport CEA,* 1968, 19
- **LITZ, M.** Uranium Carbides : « Their preparation, Structure and hydrolysis. *PhD Thesis,* 1945

- **NAWADA H.P. et al.** Thermogravimetric study of the oxidation behaviour of uranium dicarbide. *Journal of Thermal Analysis,* 1989, vol. 35, 1145-1155
- **OHMICHI, T.** The Oxidation of UC and UN powder in Air. *journal of nuclear science and technology,* 1968, vol. 5, 600-602
- **HERRMANN.** Cinétique d'oxydation du mono carbure d'uranium par l'oxygène sec ou humide. *Rapport CEA,* 1968, 19
- **MUKERJEE, S. K. ; G. A. R. RAO ; J. V. DEHADRAYA ; V. N. VAIDYA ; V. VENUGOPAL ; D.D.SOOD.** The oxidation of uranium monocarbide microspheres. *Journal of Nuclear Materials,* 1994, vol. 1, 97-106
- **MURBACH, E. W. ; G. E. BRAND.** Pyrochemical reprocessing of uranium carbide. *Summary Report. Pages: 38. Atomics international,* 1965, 38
- **NAWADA et al.** Thermogravimetric study of the oxidation behaviour of uranium dicarbide. *Journal of Thermal Analysis,* 1989, vol. 35, 1145-1155